# EUROPÄISCHE PATENTSCHRIFT

(11) **EP 2 249 018 B1**
(45) Veröffentlichungstag und Bekanntmachung des Hinweises auf die Patenterteilung: **09.03.2016**
(21) Anmeldenummer: 10004368.6
(22) Anmeldetag: 24.04.2010
(51) Int. Cl.: F02K 7/18, F02K 9/97

(54) **Flugkörper mit einem Staustrahltriebwerk**
Missile with a ram jet engine
Missile avec statoréacteur

(30) Priorität: 04.05.2009 DE 102009019916
(43) Veröffentlichungstag der Anmeldung: 10.11.2010
(73) Patentinhaber: Bayern-Chemie Gesellschaft für flugchemische Antriebe mbH, 84544 Aschau a. Inn (DE)
(72) Erfinder: Dempfle, Benedikt, 84431 Heldenstein (DE); Tussiwand, Guiseppe, Dr., 84539 Ampfing (DE)
(74) Vertreter: LS-MP von Puttkamer Berngruber Loth Spuhler

(56) Entgegenhaltungen:
- EP-A2- 1 653 074

## Beschreibung

Die Erfindung bezieht sich auf einen Flugkörper mit einem Staustrahltriebwerk nach dem Oberbegriff des Anspruchs 1.

Bei einem solchen Flugkörper brennt in der ersten Antriebs- oder Startphase ein Starttreibsatz in der Brennkammer des Staustrahltriebwerks ab. Damit entsteht beim Start des Flugkörpers in der ersten Antriebsphase im Inneren der Brennkammer ein hoher Druck. Die an dem Ende der Lufteinläufe des Staustrahltriebwerks vorgesehenen Lufteintrittsöffnungen in die Brennkammer müssen in dieser Phase druckdicht verriegelt sein. Da bei kalten Lager- oder Transporttemperaturen jedoch der Festtreibstoff des Starttreibsatzes schrumpft, darf der mit dem Treibstoff verklebte Verschlussdeckel nicht von der Brennkammerwand abheben.

Nach der ersten Antriebsphase wird der Verschlussdeckel geöffnet und mit einem z.B. pyrotechnisch betätigbaren Öffnungskolben aufgestoßen, sodass die im Lufteinlauf anstehende Stauluft über die Lufteintrittsöffnung in die Brennkammer einströmen kann, um in der anschließenden Antriebs- oder Marschflugphase ein von einem Brenngasgenerator erzeugtes, sauerstoffunterbilanziertes Brenngas in der Brennkammer zu verbrennen.

Ein solches Staustrahltriebwerk ist unter anderem in EP 1 653 074 A2 beschrieben.

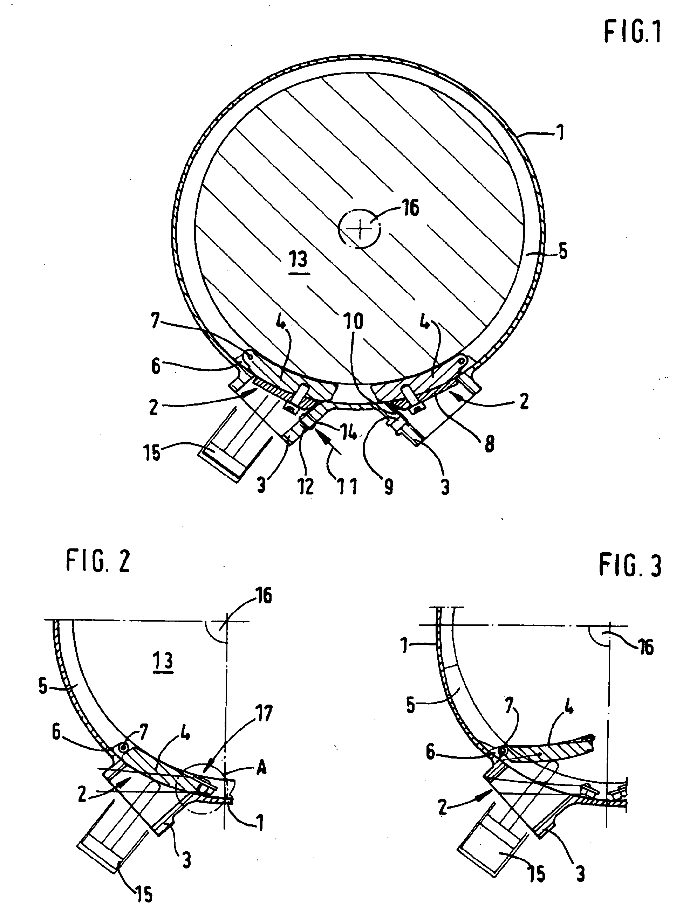

Das Staustrahltriebwerk nach dem Stand der Technik ist im Querschnitt im Bereich der Lufteintrittsöffnungen nochmals in Figur 1 dargestellt. Die zylindrische Brennkammerwand **1** weist danach Lufteintrittsöffnungen **2** auf, die an Stutzen **3** vorgesehen sind, die einstückig mit der Brennkammerwand **1** ausgebildet sind. An die Stutzen **3** schließen sich die nicht dargestellten Lufteinläufe des Staustrahltriebwerks an.

Die Lufteintrittsöffnungen **2** sind durch Verschlussdeckel **4** verschlossen. Die Brennkammerwand **1** ist mit einer thermischen Isolationsschicht **5** ausgekleidet, welche auch die Innenseite der Verschlussdeckel **4** bedeckt.

Die Verschlussdeckel **4** sind jeweils an einer an der Brennkammerwand **1** befestigten Lagerung **6** um eine in Brennkammerlängsrichtung verlaufende Achse **7** verschiebbar angelenkt. An jedem Verschlussdeckel **4** ist eine Klinke **8** befestigt, die mit einem Vorsprung **9** versehen ist, der durch einen federnden Abschnitt **10** der Klinke **8** in eine Bohrung **12** an der von der Schwenkachse **7** abgewandten Seite des Verschlussdeckels **4** des Stutzens **3** eingreift, um den Verschlussdeckel **4** zu verriegeln.

In der Brennkammer liegt ein Feststofftreibsatz **13** als Start- oder Boost-Treibsatz vollflächig an der Isolationsschicht **5** an. Nach dem Abbrennen des Treibsatzes **13** und damit nach der ersten Antriebsphase werden die Vorsprünge **9** durch die Betätigungsbolzen **14** gemäß Pfeil **11** aus der Bohrung **12** gedrückt und damit die Verschlussdeckel **4** entriegelt, wobei sie zusätzlich mit einem z.B. pyrotechnisch betätigbaren Öffnungskolben **15** nach innen aufgestoßen werden, um die Lufteintrittsöffnungen **2** zu öffnen.

Damit kann in der anschließenden zweiten Antriebs- oder Marschflugphase die in den nicht dargestellten Lufteinläufen angestaute Luft über die Lufteintrittsöffnungen **2** in die Brennkammer strömen. Sie vermischt sich dort mit dem sauerstoffunterbilanziertem Brenngas, das von einem nicht dargestellten Brenngasgenerator des Staustrahltriebwerks erzeugt wird und über die gestrichelt dargestellte Öffnung **16** in der Stirnwand der Brennkammer, die der Strahlaustrittsdüse gegenüberliegt, in die Brennkammer strömt, um es mit der eingeströmten Luft zu verbrennen.

Bei dem bekannten Staustrahltriebwerk muss die Verriegelung äußerst präzise gefertigt werden. Zudem ist sie aufwändig und mit einem hohen Ausfallrisiko verbunden. So sind zur Betätigung des Bolzens **14** ein pyrotechnischer Treibsatz und ein Übertragungsgestänge erforderlich, mit dem zusätzlichen Nachteil, dass zwischen den benachbarten Lufteintrittsöffnungen **2** ein erheblicher Bauraum und damit Abstand erforderlich ist, wodurch die Anzahl möglicher Lufteintrittsöffnungen herabgesetzt wird. Auch kann der Vorsprung **9** trotz Betätigung durch den Bolzen **14** in der Bohrung **12** hängenbleiben oder wiedereinrasten. Zudem kann sich die Befestigung der Klinke **8** an dem Verschlussdeckel **4** oder die Lagerung 6 des Verschlussdeckels **4** an der Brennkammerwand **1** lockern, sodass der Vorsprung **9** aus der Bohrung **12** austreten und der Verschlussdeckel **4** unabsichtlich aufspringen kann.

Aufgabe der Erfindung ist es deshalb, einen Öffnungsverschluss bereit zu stellen, der einen geringen Herstellungsaufwand erfordert und die Lufteintrittsöffnung während der ersten Phase der Nutzungsdauer des Flugkörpers zuverlässig abdichtet.

Dies wird erfindungsgemäß mit dem im Anspruch 1 gekennzeichneten Flugkörper erreicht. In den Unteransprüchen sind vorteilhafte Ausgestaltungen der Erfindung wiedergegeben.

Nach der Erfindung ist der Verschlussdeckel in der ersten Antriebs- oder Startphase durch eine Verriegelung verriegelt, die nach der ersten Antriebs- oder Startphase abgeschert wird, wenn der Öffnungskolben zum Öffnen des Verschlussdeckels an dem Verschlussdeckel angreift, um die Lufteintrittsöffnung für die anschließende Antriebsphase zu öffnen, in der die in dem Lufteinlauf angestaute Stauluft, das von dem Brenngasgenerator des Staustrahltriebwerks erzeugte Brenngas in der Brennkammer verbrennt.

Erfindungsgemäß ist damit keine zusätzliche Einrichtung zum Entriegeln erforderlich, wodurch teure Präzisionsführungen an der Brennkammerwand sowie eine Vielzahl an Zusatzkomponenten, z.B. ein pyrotechnischer Gasgenerator, Rohrleitungen, Betätigungskolben, Gestänge usw., zum Entriegeln entfallen, was hinsichtlich des Herstellungsaufwands, Gewichts und der Ausfallsicherheit mit erheblichen Vorteilen verbunden ist. Zugleich sind ein sicherer, dichter Verschluss der Brennkammer sowie ein zuverlässiges Öffnen des Brennkammerdeckels erfindungsgemäß gewährleistet.

Durch eine exakt definierte Scherkraft der abscherbaren Verriegelung kann der erfindungsgemäße Öffnungsverschluss ohne bewegliche Teile zuverlässig und dauerhaft ausgelegt werden. Weiterhin kann ein geringer Abstand der Lufteintrittsöffnungen voneinander verwirklicht und damit die Anzahl der Lufteintrittsöffnungen in die Brennkammer erhöht werden.

Vorzugsweise wird die definierte Scherkraft durch eine Sollbruchstelle der Verriegelung verwirklicht. Die Scherkraft wird durch das Material des Riegels und dessen Querschnittsfläche an der Sollbruchstelle bestimmt.

Durch die abscherbare Verriegelung wird der Verschlussdeckel in dem geschlossenen Zustand vorzugsweise zugleich mit der Brennkammerwand verspannt, also vom Inneren der Brennkammer gegen die Brennkammerwand an der Lufteintrittsöffnung gepresst.

Die abscherbare Verriegelung ist vorzugsweise an der von der Schwenkachse des Verschlussdeckels abgewandten Seite des Verschlussdeckels angeordnet, also bei einem rechteckigen Verschlussdeckel auf dessen von der Schwenkachse abgewandter Längsseite.

Vorzugsweise sind an der von der Schwenkachse abgewandten Seite bzw. Längsseite des Verschlussdeckels mehrere im Abstand angeordnete abscherbare Verriegelungen vorgesehen. Damit wird zum einen eine besonders zuverlässige Verriegelung des Verschlussdeckels gewährleistet, zudem braucht der Öffnungskolben nur eine relativ geringe Kraft aufzubringen, sodass man mit einem verhältnismäßig kleinen Öffnungskolben auskommen kann. Da der Verschlussdeckel eine gewisse Biegsamkeit besitzt, werden nämlich die im Abstand angeordneten Verriegelungen nacheinander einzeln abgeschert, sodass die Kraft, die der Öffnungskolben aufzubringen hat, im Wesentlichen nur der Kraft zur Öffnung einer Verriegelung zu entsprechen braucht.

Unter "Öffnungskolben" ist der Kolben einer Kolben/Zylinder-Einheit zu verstehen, wobei der Kolben mit einem vorzugsweise pyrotechnisch erzeugten Druckgas beaufschlagt wird. Der Verschlussdeckel kann dann von der Kolbenstange des Öffnungskolbens aufgestoßen werden.

Die Verriegelung umfasst vorzugsweise einen Riegel, der an der Innenseite der Brennkammerwand befestigt ist und den Verschlussdeckel an der Innenseite übergreift. Vorzugsweise weist die Verriegelung dazu einen Riegel auf, der in einer an der Brennkammerwand befestigten Führung verschiebbar ist, um in der Verriegelungsposition den Verschlussdeckel zu übergreifen. Dabei ist der Riegel vorzugsweise keilförmig ausgebildet. Durch den keilförmigen Riegel wird der Verschlussdeckel zugleich gegen die Lufteintrittsöffnung gepresst und damit verspannt.

Die Führung des Riegels kann durch ein an der Brennkammerinnenwand befestigtes Führungsstück gebildet werden, das mit einer Öffnung versehen ist, in die der Riegel gesteckt wird. Wenn das Führungsstück im Abstand von der Einstecköffnung an der von dem Verschlussdeckel abgewandten Seite der Einstecköffnung eine Auflage für den Riegel aufweist, kann die Einstecköffnung kürzer und damit das Führungsstück gewichtssparend ausgebildet werden.

Der keilförmige Riegel kann mit seinem dünnen Ende voraus in die Führung bzw. das Führungsstück von der dem Verschlussdeckel zugewandten Seite in die Einstecköffnung gesteckt werden, sodass er mit seinem dicken Ende den Verschlussdeckel übergreift. Es ist jedoch auch möglich, den Riegel von der anderen Seite der Führung bzw. des Führungsstücks, also mit seinem dünnen Ende voraus in die Einstecköffnung zu schieben, sodass er mit seinem dünnen Ende den Verschlussdeckel übergreift. Letzteres ist allerdings nur möglich, wenn zwischen zwei benachbarten Luftdurchtrittsöffnungen ein genügend großer Abstand zum Einschieben des Riegels vorhanden ist.

Die zum Abscheren erforderliche Kraft wird durch die Querschnittsfläche des Riegels bestimmt, die er an der dem Verschlussdeckel zugewandten Seite der an der Brennkammerwand befestigten Führung bzw. Führungsstücks aufweist.

Auch ist jede andere Form einer abscherbaren Verriegelung möglich, beispielsweise eine an der Brennkammerinnenwand und an dem Verschlussdeckel befestigte Einstecköffnung, wobei der Riegel in beide Einstecköffnungen eingreift. Auch können der Verschlussdeckel und die Brennkammerwand zur abscherbaren Verriegelung durch eine abscherbare Schraube miteinander verbunden sein.

Die Befestigung der Lagerung, an der der Verschlussdeckel verschwenkbar angelenkt ist und/oder der Führung für den Riegel an der Brennkammerwand ist vorzugsweise stoffschlüssig ausgebildet, also eine nicht lösbare, nur durch Zerstörung des Verbindungsmittels trennbare , Verbindung. Die stoffschlüssige Verbindung kann beispielsweise eine Schweiß- oder Lötverbindung sein. Auch ist eine einstückige Ausbildung des Lagers und/oder der Führung mit der Brennkammerwand möglich.

Eine stoffschlüssige Verbindung hat beispielsweise gegenüber einer Schraubverbindung den Vorteil, dass die Brennkammerwand nicht durch Befestigungsbohrungen geschwächt wird, die bei der hohen Temperatur im Brennraum des Staustrahltriebwerks von beispielsweise etwa 2000 °C über mehrere Minuten zum Durchbrennen und damit zu Leckstellen in der Brennkammerwand führen können. Zudem besteht bei Schrauben die Gefahr des Lockerns, wodurch die Dichtigkeit des Verschlusses beeinträchtigt werden kann.

Der Verschlussdeckel kann beispielsweise aus einem Aluminiumwerkstoff bestehen. Ein solcher Aluminiumdeckel brennt in der zweiten Antriebs- oder Marschflugphase in der Brennkammer ab. Bei einem Aluminiumdeckel kann jedoch nicht ausgeschlossen werden, dass sich davon Teile lösen, die in die thermische Isolierschicht einschlagen und diese beschädigen.

Vorteilhafterweise besteht der Verschlussdeckel daher z.B. in Sandwich-Bauweise zumindest teilweise aus einem faserverstärktem Kunststoff, beispielsweise mit einem Phenolharz als Matrix, welche z.B. mit Kohlenstoff- oder Glasfasern verstärkt ist. Dadurch wird die Gefahr von Einschlägen in die thermische Isolierschicht beseitigt und zudem das Gewicht des Deckels reduziert.

Außerdem kann der Verschlussdeckel zumindest teilweise aus Keramik bestehen, um den hohen Brennkammertemperaturen standzuhalten, wodurch gleichfalls Einschläge in die thermische Isolierschicht verhindert werden.

In der beigefügten Zeichnung ist in Figur 1 ein Querschnitt durch ein bekanntes Staustrahltriebwerk im Bereich der Lufteintrittsöffnungen dargestellt. In den übrigen Figuren sind Ausführungsformen der Erfindung beispielhaft wiedergegeben. Darin zeigen:
Figur 2 und 3 von einem Querschnitt gemäß Figur 1 einen Sektor einer erfindungsgemäßen Ausführungsform des Staustrahltriebwerks mit einer Lufteintrittsöffnung, und zwar bei geschlossenem bzw. geöffnetem Verschlussdeckel;
Figur 4 eine vergrößerte Ansicht des Bereichs A in Figur 2;
Figur 5 den Bereich A gemäß Figur 4 in der Draufsicht; und
Figur 6 einen Verschlussdeckel in der Draufsicht mit mehreren im Abstand angeordneten Verriegelungen.

In den Figuren 2 bis 6 sind diejenigen Teile, die den Teilen des bekannten Staustrahltriebwerks nach Figur 1 entsprechen, mit den gleichen Bezugsziffern versehen.

Gemäß Figur 2 ist die Brennkammer mit einem Feststofftreibsatz **13** als Starttreibsatz versehen. Der Verschlussdeckel **4,** der mit seinem Umfang an der Innenseite der Brennkammerwand **1** dicht anliegt, um die Lufteintrittsöffnung **2** zu verschließen, ist an einem Lager **6**, das an der Innenseite der Brennkammerwand **1** befestigt ist, um eine in Brennkammerlängsrichtung verlaufende Achse **7** verschwenkbar angelenkt. Das Lager **6** ist mit der Brennkammerwand **1** stoffschlüssig verbunden, beispielsweise angeschweißt.

An der von der Schwenkachse **7** abgewandten Seite ist der Verschlussdeckel **4** mit einer Verriegelung **17** verriegelt, die an der Innenseite der Brennkammerwand **1** befestigt ist.

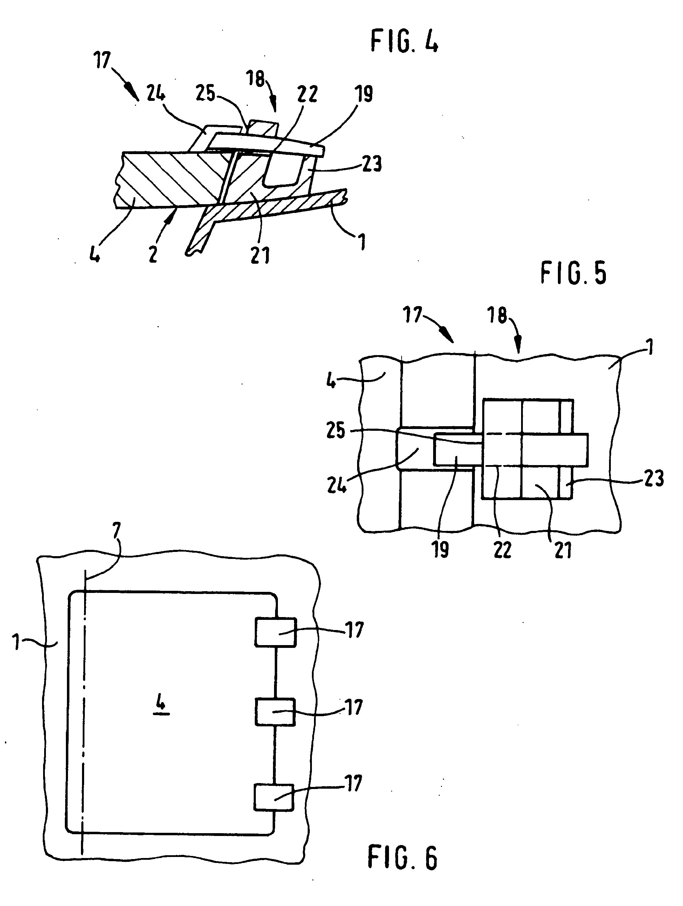

Gemäß Figur 4 und 5 wird die Verriegelung **17** durch eine an der Brennkammerwand **1** befestigte Führung **18** gebildet, in der ein Riegel **19** derart verschiebbar geführt ist, dass er in der Verriegelungsposition gemäß Figur 2 den Verschlussdeckel **4** an der Innenseite übergreift.

Der Riegel **19** ist keilförmig ausgebildet, um den Verschlussdeckel **4** mit seinem Umfang gegen den Rand der Brennkammerwand **1** zu pressen, der die Lufteintrittsöffnung **2** umgibt. Die Führung **18** wird durch ein an der Innenseite der Brennkammerwand **1** stoffschlüssig befestigtes, beispielsweise angeschweißtes Führungsstück **21** gebildet, das mit einer Einstecköffnung **22** versehen ist, in das der Riegel **19** gesteckt wird. Das Führungsstück **21** weist an der an dem Verschlussdeckel **4** abgewandten Seite der Einstecköffnung **22** ein Auflager **23** für den Riegel **19** auf. Der Verschlussdeckel **4** ist an der der Verriegelung **17** zugewandten Seite mit einer Nut **24** versehen, die mit der Einstecköffnung **22** fluchtet.

Der keilförmige Riegel **19** wird mit seinem dünnen Ende voraus von der Nut **24** in die Einstecköffnung **22** gesteckt, sodass er im eingesteckten Zustand mit seinem dicken Ende den Verschlussdeckel **4** übergreift.

Die Verriegelung **17** ist abscherbar ausgebildet. Dazu weist der Riegel **19** an der dem Verschlussdeckel **4** zugewandten Kante **25** der Einstecköffnung **22** einen solchen Querschnitt auf, dass er abgeschert wird, wenn an dem Verschlussdeckel **4** nach dem Abbrand des Starttreibsatzes **13** der Öffnungskolben **15** angreift, um den Verschlussdeckel **4** aufzustoßen. Durch die Querschnittsfläche des Riegels **19** an der Kante **25** der Einstecköffnung **22** wird damit eine Sollbruchstelle gebildet, d.h. die Scherkraft bestimmt.

Gemäß Figur **6** sind an der von der Schwenkachse **7** abgewandten Längsseite des Verschlussdeckels **4** mehrere im Abstand angeordnete Verriegelungen **17** vorgesehen, die entsprechend Figur 4 und 5 ausgebildet sind. Damit kann ein Öffnungskolben **15** vorgesehen werden, der eine relativ geringe Kraft aufbringt. Da der Verschlussdeckel **4** eine gewisse Biegsamkeit besitzt, werden nämlich die Verriegelungen **17** bei Angriff des Öffnungskolbens **15** an dem Verschlussdeckel **4** nacheinander abgeschert.

### Bezugszeichenliste

- 1: Brennkammerwand
- 2: Lufteintrittsöffnung
- 3: Stutzen
- 4: Verschlussdeckel
- 5: Isolationsschicht
- 6: Lagerung
- 7: Achse
- 8: Klinke
- 9: Vorsprung
- 10: Abschnitt
- 11: Pfeil
- 12: Bohrung
- 13: Feststofftreibsatz
- 14: Betätigungsbolzen
- 15: Öffnungskolben
- 16: Öffnung
- 17: Verriegelung
- 18: Führung
- 19: Riegel
- 20:
- 21: Führungsstück
- 22: Einstecköffnung
- 23: Auflager
- 24: Nut
- 25: Kante

## Patentansprüche

1. Flugkörper mit einem Staustrahltriebwerk, welcher mindestens zwei Antriebsphasen aufweist, wobei das Staustrahltriebwerk eine mit einem Starttreibsatz (13) versehene Brennkammer mit wenigstens einer Lufteintrittsöffnung (2) aufweist, die in der ersten Antriebsphase, in der der Starttreibsatz (13) abgebrannt wird, durch einen an der Brennkammerwand (1) verschwenkbar angelenkten, mit einer Verriegelung (17) verriegelbaren Verschlussdeckel (4) verschlossen ist, der anschließend mit einem Öffnungskolben (15) aufgestoßen wird, wozu eine durch die Kraft des Öffnungskolbens (15) lösbare Verriegelung (17) vorgesehen ist,
**dadurch gekennzeichnet, dass**
die Verriegelung (17) einen Riegel (19) umfasst, der in einer an der Brennkammerwand (1) befestigten Führung (18) verschiebbar ist, in der Verriegelungsposition den Verschlussdeckel (4) an der Innenseite übergreift und durch Betätigung des Öffnungskolbens abscherbar ist.

2. Flugkörper nach Anspruch 1,
**dadurch gekennzeichnet, dass**
die abscherbare Verriegelung (17) eine Sollbruchstelle aufweist.

3. Flugkörper nach Anspruch 1 oder 2,
**dadurch gekennzeichnet, dass**
der Verschlussdeckel (4) durch die abscherbare Verriegelung (17) im verschlossenen Zustand mit der Brennkammerwand (1) verspannt ist.

4. Flugkörper nach einem der vorstehenden Ansprüche,
**dadurch gekennzeichnet, dass**
die abscherbare Verriegelung (17) an der von der Schwenkachse (7) abgewandten Seite des Verschlussdeckels (4) angeordnet ist.

5. Flugkörper nach Anspruch 4,
**dadurch gekennzeichnet, dass**
an der von der Schwenkachse (7) abgewandten Seite des Verschlussdeckels (4) mehrere im Abstand angeordnete abscherbare Verriegelungen (17) vorgesehen sind.

6. Flugkörper nach Anspruch 1,
**dadurch gekennzeichnet, dass**
der Riegel (19) keilförmig ausgebildet ist.

7. Flugkörper nach Anspruch 1,
**dadurch gekennzeichnet, dass**
die Lagerung (6), an der der Verschlussdeckel (4) verschwenkbar angelenkt ist, und/oder die Führung (18) für den Riegel (19) an der Brennkammerwand (1) stoffschlüssig befestigt sind.

8. Flugkörper nach einem der vorstehenden Ansprüche,
**dadurch gekennzeichnet, dass**
der Verschlussdeckel (4) zumindest teilweise aus einem faserverstärkten Werkstoff besteht.

9. Flugkörper nach einem der vorstehenden Ansprüche,
**dadurch gekennzeichnet, dass**
der Verschlussdeckel (4) zumindest teilweise aus einem keramischen Werkstoff besteht.

## Claims

1. Missile with a ramjet engine having at least two propulsion phases, wherein the ramjet engine has a combustion chamber equipped with a starting propellant charge (13) and having at least one air inlet opening (2) which, in the first propulsion phase, during which the starting propellant charge (13) is combusted, is closed by means of a sealing cover (4) which is pivotally hinged to the combustion chamber wall (1) and lockable by a locking device (17) and which is then pushed open by an opening piston (15), for the purpose of which a locking device (17) is provided which is unlockable by the force of the opening piston (15),
**characterized in that**
the locking device (17) includes a bolt (19) which is movable in a guide (18) attached to the combustion chamber wall (1), overlaps the sealing cover (4) on the inside in the locking position, and can be sheared off by actuating the opening piston (15).

2. Missile according to claim 1,
**characterized in that**
the shearable locking device (17) has a predetermined breaking point.

3. Missile according to claim 1 or 2,
**characterized in that**
in the closed state, the sealing cover (4) is braced with the combustion chamber wall (1) by means of the shearable locking device (17).

4. Missile according to any of the preceding claims,
**characterized in that**
the shearable locking device (17) is arranged on the side of the sealing cover (4) facing away from the pivot axis (7).

5. Missile according to claim 4,
**characterized in that**
a plurality of shearable locking devices (17) arranged at a distance from each other are provided on the side of the sealing cover (4) facing away from the pivot axis (7).

6. Missile according to claim 1,
**characterized in that**
the bolt (19) is wedge-shaped.

7. Missile according to claim 1,
**characterized in that**
the bearing (6) to which the sealing cover (4) is pivotally hinged and/or the guide (18) for the bolt (19) are attached to the combustion chamber wall (1) in a material closing manner.

8. Missile according to any of the preceding claims,
**characterized in that**
the sealing cover (4) is at least partially made of a fibre-reinforced material.

9. Missile according to any of the preceding claims,
**characterized in that**
the sealing cover (4) is at least partially made of a ceramic material.

## Revendications

1. Missile comprenant un statoréacteur qui comporte au moins deux phases d'entraînement, le statoréacteur présentant une chambre de combustion pourvue d'une charge propulsive de départ (13), avec au moins un orifice d'entrée d'air (2) qui, dans la première phase d'entraînement dans laquelle la charge propulsive de départ (13) est brûlée, est fermé par un couvercle de fermeture (4) articulé de manière pivotante sur la paroi de chambre de combustion (1) et susceptible d'être verrouillé par un verrouillage (17), lequel couvercle de fermeture (4) est ensuite éjecté par un piston d'ouverture (15), ce pourquoi est prévu un verrouillage (17) détachable par la force du piston d'ouverture (15),
**caractérisé en ce que**
le verrouillage (17) comprend un pêne (19) qui peut être déplacé dans un guidage (18) fixé sur la paroi de chambre de combustion (1), qui, dans la position de verrouillage, chevauche le couvercle de fermeture (4) sur la face intérieure et peut être cisaillé par actionnement du piston d'ouverture.

2. Missile selon la revendication 1,
**caractérisé en ce que**
le verrouillage (17) cisaillable présente une zone de rupture.

3. Missile selon la revendication 1 ou 2,
**caractérisé en ce que**
à l'état de fermeture, le couvercle de fermeture (4) est serrée avec la paroi de chambre de combustion (1) par le verrouillage (17) cisaillable.

4. Missile selon l'une des revendications précédentes,
**caractérisé en ce que**
le verrouillage (17) cisaillable est agencé sur la face du couvercle de fermeture (4) qui est détournée de l'axe de pivotement (7).

5. Missile selon la revendication 4,
**caractérisé en ce que**
sur la face du couvercle de fermeture (4), qui est détournée de l'axe de pivotement (7), sont prévus plusieurs verrouillages (17) cisaillables agencés avec espacement.

6. Missile selon la revendication 1,
**caractérisé en ce que**
le pêne (19) est réalisé en forme de clavette.

7. Missile selon la revendication 1,
**caractérisé en ce que**
le logement (6) au niveau duquel le couvercle de fermeture (4) est articulé de manière à pouvoir pivoter et/ou le guidage (18) pour le pêne (19) sont fixés par liaison de matière sur la paroi de chambre de combustion (1).

8. Missile selon l'une des revendications précédentes,
**caractérisé en ce que**
le couvercle de fermeture (4) est constitué au moins partiellement par un matériau renforcé par des fibres.

9. Missile selon l'une des revendications précédentes,
**caractérisé en ce que**
le couvercle de fermeture (4) est constitué au moins partiellement par un matériau céramique.
